# EUROPÄISCHE PATENTANMELDUNG

(11) **EP 1 280 254 A2**
(43) Veröffentlichungstag der Anmeldung: **29.01.2003**
(21) Anmeldenummer: 02014827.6
(22) Anmeldetag: 03.07.2002
(51) Int. Cl.: H02K 7/08

(54) **Elektromotorische Antriebseinheit**

(30) Priorität: 04.07.2001 DE 20111079 U
(71) Anmelder: Dewert Antriebs- und Systemtechnik GmbH & Co. KG, D-32278 Kirchlengern (DE)
(72) Erfinder: Roither, Andreas, 32130 Enger (DE); Bokämper, Ralf, 32312 Lübbecke (DE)
(74) Vertreter: Specht, Peter, Dipl.-Phys.

(57) **Zusammenfassung**

Eine elektromotorische Antriebseinheit zum Antrieb von bewegbaren Möbelbauteilen ist mit einer rotierend antreibbaren Spindel ausgerüstet, auf die ein Schneckenrad drehfest aufgesetzt ist. Ein derartiger Möbelantrieb soll so gestaltet werden, dass eine einfache, auch nach längerer Betriebszeit noch feste Verbindung zwischen dem Schneckenrad und der Spindel gegeben ist, wobei die Antriebseinheit mit minimalen Kosten hergestellt werden soll.

Erfindungsgemäß ist das Antriebsrad mit einer Innengewindebohrung ausgestattet, wobei die Steigung und die Gewindegänge der Gewindebohrung denen der Spindel (10) entsprechen, so dass das Antriebsrad (12) auf die Spindel (10) aufschraubbar ist. Das Antriebsrad (12) ist mit einer Stufenbohrung mit mindestens zwei Stufen ausgestattet, wobei die Spindel (10) einen Zentrieransatz aufweist.

Die erfindungsgemäße elektromotorische Antriebseinheit ist besonders für Lattenrostantriebe geeignet.

## Beschreibung

Die Erfindung bezieht sich auf eine elektromotorische Antriebseinheit, bei der auf eine rotierend antreibbare Spindel ein Antriebsrad, vorzugsweise ein Schneckenrad drehfest aufgesetzt ist.

Die in Frage kommende elektromotorische Antriebseinheit wird bevorzugt als Stellantrieb für Möbelbauteile verwendet. Die Antriebseinheit kann mit einem Antriebsmotor und einer Gewindespindel oder mit zwei Antriebsmotoren und zwei Gewindespindeln ausgerüstet sein. Die Abtriebsdrehzahl des Antriebsmotors wird durch eine ein- oder mehrstufige Getriebestufe herabgesetzt, da die Verstellgeschwindigkeit des von der elektromotorischen Antriebseinheit angetriebenen Bauteiles relativ gering ist. Demzufolge ist auch die Drehzahl der Spindel entsprechend gering. Auf die Spindel ist normalerweise eine Spindelmutter aufgesetzt, die in Längsrichtung der Spindel verfahrbar und gegen Verdrehung gesichert ist. Die in Rede stehenden elektromotorischen Antriebseinheiten werden in großen Stückzahlen vertrieben und müssen demzufolge kostengünstig angeboten werden können.

Die Reduzierung der Drehzahl der Spindel erfolgt üblicherweise über einen Schneckentrieb, wobei das Schneckenrad drehfest auf die Spindel aufgesetzt ist.

Es ist bekannt, ein einstückiges Schneckenrad mit einer integrierten Lageraufnahme zu verwenden, und dieses Schneckenrad auf eine Spindel aufzupressen, die mit einer Rändelung versehen ist. Ein Lager soll auf einen angedrehten Zapfen der Spindel aufgepresst und durch Verformung festgelegt sein. Derartige Ausführungen sind jedoch auf Dauer nicht zufriedenstellend, da die feste Verbindung zwischen der gerändelten Spindel und der Bohrung des Schneckenrades sich bei Belastung im Laufe der Zeit lösen kann. Außerdem ist für das Rändeln der Spindel ein zusätzlicher Arbeitsgang erforderlich.

Der Erfindung liegt die Aufgabe zugrunde, eine elektromotorische Antriebseinheit der eingangs näher beschriebenen Art so zu gestalten, dass eine einfache, auch nach längerer Betriebszeit noch feste Verbindung zwischen dem Schneckenrad und der Spindel gegeben ist, und dass die Antriebseinheit mit minimalen Kosten herstellbar ist.

Die gestellte Aufgabe wird gelöst, indem das Antriebsrad mit einer Innengewindebohrung ausgestattet ist, und dass die Steigung und die Gewindegänge denen der Spindel entsprechen, so dass das Antriebsrad auf die Spindel aufschraubbar ist und zumindest in einer Drehrichtung gegen Verdrehung gegenüber der Spindel und gegen Verschiebung in achsialer Richtung gesichert ist.

Bei der erfindungsgemäßen elektromotorischen Antriebseinheit wird nunmehr das Gewinde für die Verbindung zwischen der Spindel und dem Antriebsrad genutzt. Die Länge des Außengewindes der Spindel wird gegenüber den bekannten Ausführungen nunmehr um einen bestimmten Betrag verlängert. Die dadurch entstehenden Kosten können vernachlässigt werden. Üblicherweise wird das Antriebsrad aus einem Kunststoff im Spritzgießverfahren hergestellt. Es ist demzufolge nur eine entsprechende Auslegung des Werkzeuges erforderlich, so dass auch durch die Innengewindebohrung des Antriebsrades keine nennenswerten Kosten entstehen. Als Gewindeart kommt bevorzugt Trapez- oder Spitzgewinde in Betracht. In weiterer Ausgestaltung ist vorgesehen, dass das Antriebsrad eine Stufenbohrung mit mindestens zwei Stufen aufweist, und dass die Spindel einen Zentrieransatz aufweist, der vorzugsweise bis zum freien Ende der Spindel reicht, und dass das Antriebsrad in diesem Bereich mit einer angepassten Bohrung versehen ist. Der Zentrieransatz ist notwendig, da bekanntlich Gewinde nicht zentrierend wirken. Der Außendurchmesser des Zentrieransatzes ist gegenüber dem Außendurchmesser der Gewindegänge der Spindel reduziert. Sofern die Antriebseinheit als Möbelantrieb verwendet wird, wird normalerweise in einer Drehrichtung das als Last anzusehende Möbelbauteil verstellt, beispielsweise nach oben geschwenkt. Die Rückbewegung in der entgegengesetzten Richtung erfolgt durch das Gewicht des Möbelbauteils. Bei der letztgenannten Bewegung wird die Spindel mit gleicher oder annähernd gleicher Drehzahl angetrieben, wie beim Hochfahren der Last, jedoch in der entgegengesetzten Drehrichtung. Dadurch ist sichergestellt, dass das angeschlossene Möbelbauteil mit einer relativ geringen Geschwindigkeit abgesenkt wird und nicht schlagartig. Damit das Anheben des angeschlossenen Möbelbauteils bzw. der Last erfolgen kann, ist vorgesehen, dass die Gewindegänge der Spindel und der Bohrung des Antriebsrades gegenläufig zur Lastdrehrichtung der Spindel sind. Zusätzliche Sicherungselemente sind bei einer solchen Ausführung nicht mehr notwendig. Zweckmäßigerweise sind die Abmessungen so gewählt, dass der Außendurchmesser des Zentrieransatzes mit dem Innendurchmesser der Gewindegänge der Gewindebohrung des Antriebsrades übereinstimmt oder annähernd übereinstimmt, vorzugsweise jedoch ein klein wenig geringer ist. Dadurch läßt sich das Antriebsrad ohne Aufbringung von Kräften oder sogar berührungsfrei soweit auf die Spindel schieben, bis dass die Gewindegänge miteinander in Eingriff kommen. Damit eine ausreichend große Anzahl von Gewindegängen miteinander in Eingriff kommen, dass jedoch auch die Zentrierung gesichert ist, ist vorgegeben, dass die Länge des Gewindeteils der Stufenbohrung des Antriebsrades mit dem gewindefreien Teil übereinstimmt oder annähernd übereinstimmt. Diese Aufteilung ist jedoch nicht bindend, da es auch durchaus ausreichend sein kann, wenn der Zentrieransatz kürzer ist, als der Bereich der miteinander in Eingriff stehenden Gewindegänge. Zur optimalen Lagerung des Antriebsrades und der Spindel ist vorgesehen, dass das Antriebsrad in beiden Stirnendbereichen jeweils einen passgenauen Lagersitz aufweist. Auf diese Lagersitze werden in bevorzugter Ausführung Wälzkugellager aufgesetzt, deren Außenringe fest in entsprechenden Lagersitzen eines Gehäuses eingesetzt sind. Damit das dem freien Endbereich zugeordnete Lager gegen Verschiebung in axialer Richtung gesichert ist, ist vorgesehen, dass auf den Endbereich des Zentrieransatzes der Spindel eine Sicherungsscheibe drehfest aufgesetzt ist. Die Festlegung der Sicherungsscheibe kann mit den allgemeinen Mitteln bzw. Methoden erfolgen. Die Spindel ist bevorzugt aus Metall, insbesondere Stahl gefertigt, während das Antriebsrad aus einem Kunststoff besteht.

Anhand der beiliegenden Zeichnung wird die Erfindung noch näher erläutert. Es zeigt:

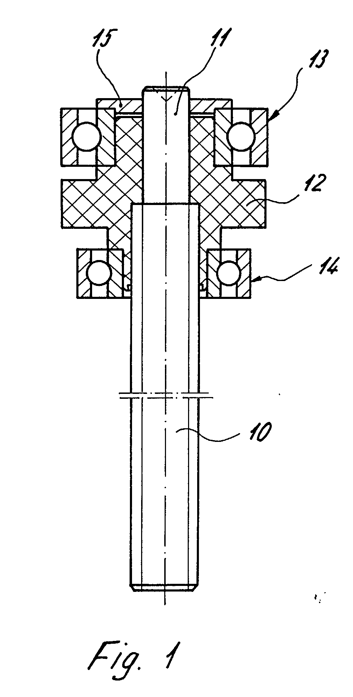

- Figur 1: die Spindel mit dem aufgesetzten Antriebsrad und den Lagern der erfindungsgemäßen Antriebseinheit in Schnittdarstellung.
Aus Gründen der vereinfachten Darstellung ist die Antriebseinheit als Ganzes nicht dargestellt. Die Antriebseinheit enthält eine rotierend antreibbare Spindel 10, die an einem Ende einen Zentrieransatz 11 aufweist. Demzufolge erstreckt sich das Außengewinde der Spindel 10 nur über den Bereich außerhalb des Zentrieransatzes 11. In nicht dargestellter Weise ist auf die Spindel 10 eine Spindelmutter aufgesetzt, die gegen Drehung gesichert ist und bei Drehung der Spindel in achsialer Richtung verfahrbar ist. Auf das dem Antrieb zugeordnete Ende der Spindel 10 ist ein Antriebsrad 12, vorzugsweise ein Schneckenrad aufgedreht. Wie die Figur 1 zeigt, ist das Antriebsrad 12 mit einer Stufenbohrung versehen, wobei der Bereich mit dem größten Durchmesser Innengewindegänge trägt, die mit den zugehörigen Außengewindegängen der Spindel 10 in Eingriff stehen. Der Bereich mit dem kleineren Durchmesser ist sinngemäß spielfrei auf dem Zentrieransatz 11 gelagert. Die Figur 1 zeigt, dass das Antriebsrad 12 an beiden Stirnendbereichen mit passgenauen Lagersitzen versehen ist, deren Durchmesser deutlich geringer sind als der die Verzahnung tragende mittlere Bereich. Auf jeden Lagersitz ist ein Wälzlager 13, 14 fest aufgesetzt, so dass sich die Innenringe mitdrehen. Die Außenringe der Wälzlager 13, 14 sind in passgenauen Bohrungen des nicht dargestellten Gehäuses oder von Wälzlagerringen eingesetzt, so dass sie fest stehen. In nicht näher dargestellter Weise steht das Antriebsrad 12 mit einem entsprechend gestalteten antreibenden Rad in Eingriff, welches von dem Antriebsmotor angetrieben wird. Es ergibt sich noch aus der Figur 1, zur Sicherung des äußeren Wälzlagers 13 ist auf den freien Endbereich des Zentrieransatzes 11 noch ein Sicherungsring 15 fest aufgesetzt, der mit allgemein bekannten Elementen oder Methoden festgelegt ist.

Die Erfindung ist nicht auf das dargestellte Ausführungsbeispiel beschränkt. Wesentlich ist, dass die drehfeste Verbindung zwischen dem Antriebsrad 12 und der Spindel 10 durch miteinander in Eingriff stehende Gewindegänge erfolgt.

## Patentansprüche

1. Elektromotorische Antriebseinheit, bei der auf eine rotierend antreibbare Spindel ein Antriebsrad, vorzugsweise ein Schneckenrad drehfest aufgesetzt ist, **dadurch gekennzeichnet, dass** das Antriebsrad mit einer Innengewindebohrung ausgestattet ist, und dass die Steigung und die Gewindegänge der Gewindebohrung denen der Spindel (10) entsprechen, so dass das Antriebsrad (12) auf die Spindel (10) aufschraubbar ist.

2. Elektromotorische Antriebseinheit nach Anspruch 1, **dadurch gekennzeichnet, dass** das Antriebsrad (12) eine Stufenbohrung mit mindestens zwei Stufen aufweist, und dass die Spindel (10) einen Zentrieransatz aufweist.

3. Elektromotorische Antriebseinheit nach Anspruch 2, **dadurch gekennzeichnet, dass** der Zentrieransatz (11) einen gegenüber dem Außendurchmesser der Gewindegänge der Spindel (10) reduzierten Außendurchmesser aufweist.

4. Elektromotorische Antriebseinheit nach einem oder mehreren der vorhergehenden Ansprüche 1 bis 3, **dadurch gekennzeichnet, dass** die Gewindegänge der Spindel (10) und des Antriebsrades (12) gegenläufig zur Lastdrehrichtung der Spindel (10) verlaufen.

5. Elektromotorische Antriebseinheit nach einem oder mehreren der vorhergehenden Ansprüche 1 bis 4, **dadurch gekennzeichnet, dass** der Außendurchmesser des Zentrieransatzes (11) der Spindel (10) mit dem Innendurchmesser der Gewindegänge der Gewindebohrung des Antriebsrades (12) übereinstimmt oder annähernd übereinstimmt, vorzugsweise jedoch ein klein wenig geringer ist.

6. Elektromotorische Antriebseinheit nach einem oder mehreren der vorhergehenden Ansprüche 1 bis 5, **dadurch gekennzeichnet, dass** die Länge des Gewindeteils der Stufenbohrung des Antriebsrades (12) mit dem gewindefreien Teil übereinstimmt oder annähernd übereinstimmt.

7. Elektromotorische Antriebseinheit nach einem oder mehreren der vorhergehenden Ansprüche 1 bis 6, **dadurch gekennzeichnet, dass** das Antriebsrad (12) in beiden Stirnendbereichen jeweils einen passgenauen Lagersitz für Wälzlager (13, 14) aufweist.

8. Elektromotorische Antriebseinheit nach einem oder mehreren der vorhergehenden Ansprüche 1 bis 7, **dadurch gekennzeichnet, dass** auf den freien äußeren Endbereich des Zentrieransatzes (11) der Spindel (10) eine Sicherungsscheibe (15) festgesetzt ist.
